# EUROPEAN PATENT APPLICATION

(11) **EP 4 741 457 A1**
(43) Date of publication of application: **13.05.2026**
(21) Application number: 24835963.0
(22) Date of filing: 26.06.2024
(51) Int. Cl.: C08L 67/02, B65D 1/00, C08G 63/672, C08K 5/29

(54) **POLYESTER RESIN COMPOSITION AND MOLDED ARTICLE THEREOF**

(30) Priority: 03.07.2023 JP 2023109584
(71) Applicant: MITSUBISHI GAS CHEMICAL COMPANY, INC., Chiyoda-ku Tokyo 100-8324 (JP)
(72) Inventor: TAGUWA, Ken, Hiratsuka-shi, Kanagawa 254-0016 (JP); MORISHITA, Takami, Hiratsuka-shi, Kanagawa 254-0016 (JP)
(74) Representative: Vossius & Partner Patentanwälte Rechtsanwälte mbB
(86) International application number: PCT/JP2024/023173
(87) International publication number: WO 2025/009450

(57) **Abstract**

According to the present invention, there can be provided a polyester resin composition comprising a polyester resin (A) and a dye (B), wherein the polyester resin (A) has a dicarboxylic acid constituent unit and a diol constituent unit, the dicarboxylic acid constituent unit is a terephthalic acid unit and/or a 2,6-naphthalenedicarboxylic acid unit, 5% to 90% by mole of the diol constituent unit is a unit represented by the following general formula (1) or general formula (2), and 5% to 90% by mole of the diol constituent unit is a unit derived from an alicyclic diol, and the dye (B) is a combination of two or more types of dyes each having a structure containing at least two secondary amino groups and at least one benzene ring:

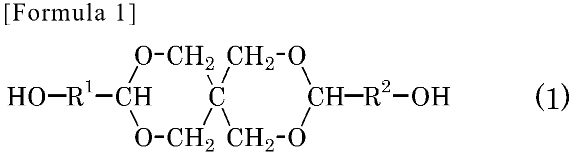

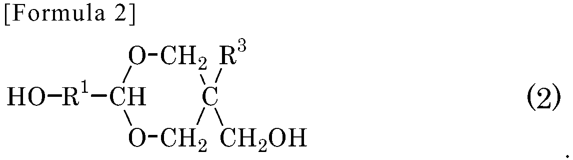

## Description

### Technical Field

The present invention relates to a polyester resin composition, and a molded product such as a baby bottle that uses the aforementioned polyester resin composition.

### Background Art

Aromatic saturated polyester resin, in particular, polyethylene terephthalate (hereinafter referred to as "PET" at times), is a resin that provides a well-balanced combination of mechanical performance, solvent resistance, fragrance retention, weather resistance, recyclability, and the like, and it has been widely used mainly for intended uses such as bottles and films. However, PET has drawbacks in terms of crystallinity and heat resistance. That is to say, regarding crystallinity, since PET has high crystallinity, PET whitens due to crystallization and loses its transparency when it is used to produce thick molded bodies or sheets. Moreover, regarding heat resistance, since the glass transition temperature of PET is approximately 80°C, it can be said that PET is unsuitable for intended uses requiring high heat resistance and high transparency, such as products used inside automobiles, packaging materials for imports and exports, food packaging materials for retort treatment or microwave heating, and baby bottles, tableware, etc. for heat sterilization treatment.

For this reason, low-crystallinity polyester resins, such as modified PET partially copolymerized with 1,4-cyclohexanedimethanol or modified PET partially modified with isophthalic acid, have been conventionally used for intended uses requiring transparency. However, although such modified PET partially copolymerized with 1,4-cyclohexanedimethanol and modified PET partially modified with isophthalic acid are improved in terms of transparency, compared to PET, the glass transition temperature of these resins is around 80°C, making them poor in heat resistance.

Moreover, regarding areas requiring heat resistance, polyester resins such as polyethylene 2,6-naphthalate (hereinafter referred to as "PEN" at times) and poly(1,4-cyclohexanedimethylene terephthalate), which have a high glass transition temperature, have been used. However, although PEN and poly(1,4-cyclohexanedimethylene terephthalate) have improved in terms of heat resistance, they have high crystallinity and poor transparency.

Furthermore, as a polyester resin that has improved the heat resistance of PET and PEN while having high transparency, a polyester resin containing a diol having a cyclic acetal skeleton has been proposed (Patent Literatures 1 and 2). Such a polyester resin can be utilized for intended uses, in which transparency and heat resistance are required.

However, in the field of baby bottles, etc., in which boiling sterilization had been conventionally used, the use of home UV sterilizers has become widespread in recent years, and UV sterilization has become a common sterilization method. Further, in response to growing societal needs such as ESG and SDGs, the packaging of baby bottles and other items is increasingly becoming simpler (from paper boxes to simple shrink film only).

### Citation List

### Patent Literature

Patent Literature 1: JP Patent Publication (Kokai) No. 2017-105873 A
Patent Literature 2: International Publication WO2020/218324

### Summary of Invention

### Technical Problem

For this reason, it is required to impart UV resistance to polyester resins, so as to suppress deterioration such as a decrease in strength and deterioration such as color change due to UV irradiation by UV sterilizers, etc., or exposure to fluorescent lights and sunlight when displayed in stores. Furthermore, when UV resistance is imparted, it is also required not to impair (or even to improve) the color tone of thermoplastic polyester resins.

### Solution to Problem

As a result of intensive studies, the present inventors have found that, by combining two or more types of dyes each having a specific structure with a polyester resin having a predetermined composition, it is possible to impart UV resistance to the polyester resin without deteriorating its color tone, thereby completing the present invention.

Specifically, the present invention includes the following aspects.
[1] A polyester resin composition comprising a polyester resin (A) and a dye (B), which is characterized in that
   the polyester resin (A) has a dicarboxylic acid constituent unit and a diol constituent unit,
   the dicarboxylic acid constituent unit is a terephthalic acid unit and/or a 2,6-naphthalenedicarboxylic acid unit,
   5% to 90% by mole of the diol constituent unit is a unit derived from a diol having a cyclic acetal skeleton represented by the following general formula (1) or general formula (2), and 5% to 90% by mole of the diol constituent unit is a unit derived from an alicyclic diol, and
   the dye (B) is a combination of two or more types of dyes each having a structure containing at least two secondary amino groups and at least one benzene ring: 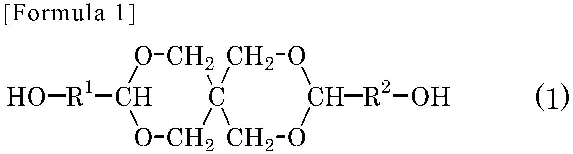
   wherein, in the formula (1), R¹ and R² each independently represent an aliphatic group containing 1 to 10 carbon atoms, an alicyclic group containing 3 to 10 carbon atoms, or an aromatic group containing 6 to 10 carbon atoms, 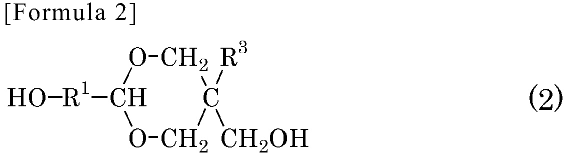
   wherein, in the formula (2), R¹ is the same as that described above, R³ represents an aliphatic group containing 1 to 10 carbon atoms, an alicyclic group containing 3 to 10 carbon atoms, or an aromatic group containing 6 to 10 carbon atoms.
[2] The polyester resin composition according to the above [1], wherein the dye (B) is a dye of two or more colors selected from the group consisting of C.I. (Color Index) Solvent Blue RR, Solvent Blue 97, Solvent Blue 104, Solvent Violet 36, and Reactive Red 2.
[3] The polyester resin composition according to the above [1], wherein the dye (B) is a dye of two or more types selected from the group consisting of compounds represented by the following formulae (3) to (6): 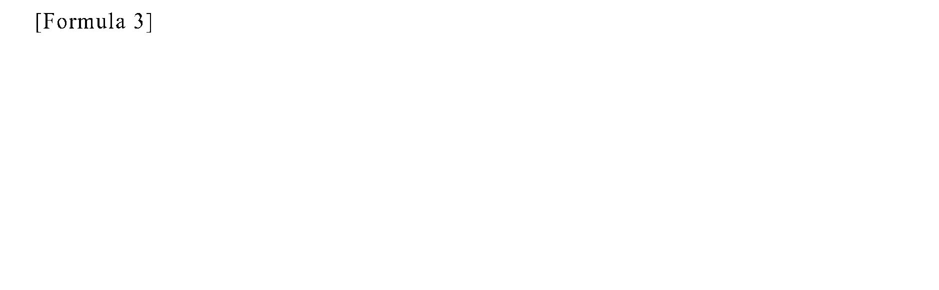 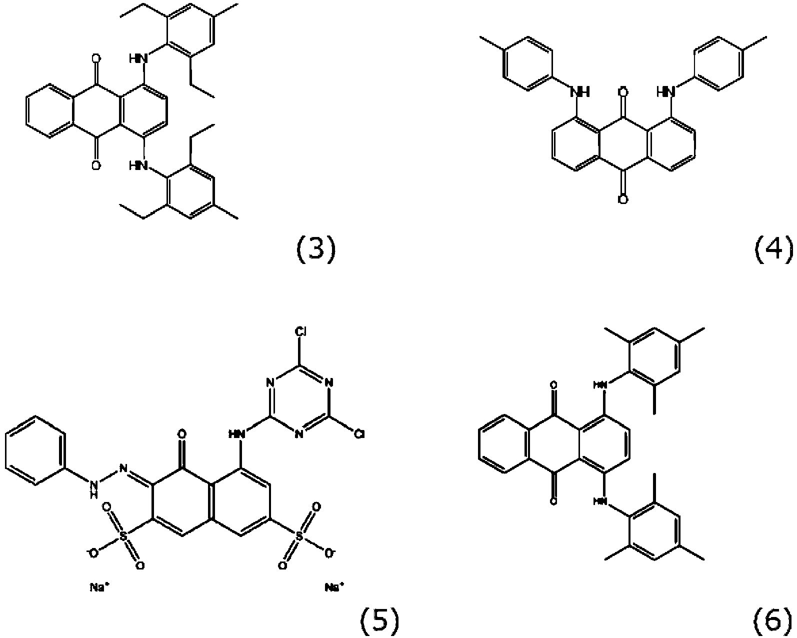
[4] The polyester resin composition according to any one of the above [1] to [3], which contains the dye (B) in an amount of 3.0 ppm or more and 10 ppm or less.
[5] The polyester resin composition according to any one of the above [1] to [4], wherein the diol having a cyclic acetal skeleton is 3,9-bis(1,1-dimethyl-2-hydroxyethyl)-2,4,8,10-tetraoxaspiro[5.5]undecane, and the alicyclic diol is 1,4-cyclohexanedimethanol.
[6] The polyester resin composition according to any one of the above [1] to [5], wherein the dicarboxylic acid constituent unit is a 2,6-naphthalenedicarboxylic acid unit.
[7] The polyester resin composition according to any one of the above [1] to [6], wherein the content of polycarbodiimide in the polyester resin composition is less than 0.1% by mass.
[8] A molded product, which uses the polyester resin composition according to any one of the above [1] to [7].
[9] A container, which uses the polyester resin composition according to any one of the above [1] to [8].
[10] A baby bottle, which uses the polyester resin composition according to any one of the above [1] to [9].

### Advantageous Effects of Invention

The polyester resin composition of the present invention has UV resistance and further, the color tone thereof is not impaired.

### Description of Embodiments

Hereinafter, the embodiments for carrying out the present invention (hereinafter simply referred to as "the present embodiment") will be described in detail. The present embodiment described below is an example for explaining the present invention, and are not intended to limit the present invention to the following content. The present invention can be modified and carried out, as appropriate, within the scope of the gist thereof.

### < Polyester resin composition >

The polyester resin composition of the present embodiment comprises a polyester resin (A) and a dye (B).

### [Polyester resin (A)]

Polyester resin (A) has a dicarboxylic acid constituent unit and a diol constituent unit.

### (Diol constituent unit)

5% to 90% By mole of the diol constituent unit in the polyester resin (A) is a unit derived from a diol having a cyclic acetal skeleton represented by the following general formula (1) or general formula (2), and 5% to 90% by mole of the diol constituent unit is a unit derived from an alicyclic diol:

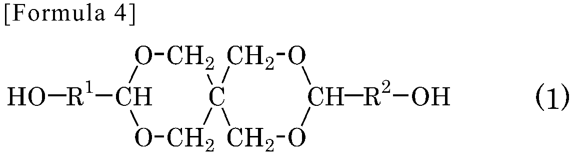

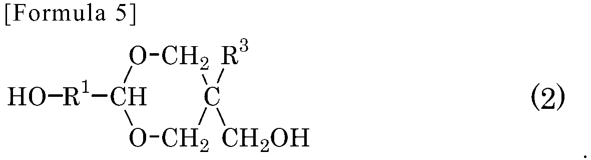

In the above formulae (1) and (2), R¹ and R² each independently represent an aliphatic group containing 1 to 10 carbon atoms, an alicyclic group containing 3 to 10 carbon atoms, or an aromatic group containing 6 to 10 carbon atoms, and preferably, R¹ and R² are selected from the group consisting of a methylene group, an ethylene group, a propylene group, a butylene group, and structural isomers thereof such as, for example, an isopropylene group and an isobutylene group.

R³ represents an aliphatic group containing 1 to 10 carbon atoms, an alicyclic group containing 3 to 10 carbon atoms, or an aromatic group containing 6 to 10 carbon atoms, and preferably, R³ is selected from the group consisting of a methyl group, an ethyl group, a propyl group, a butyl group, and structural isomers thereof such as, for example, an isopropyl group and an isobutyl group.

The diol having a cyclic acetal skeleton represented by the above formula (1) is particularly preferably 3,9-bis(1,1-dimethyl-2-hydroxyethyl)-2,4,8,10-tetraoxaspiro[5.5]undecane (which is also referred to as spiroglycol).

The diol having a cyclic acetal skeleton represented by the above formula (2) is particularly preferably 5-methylol-5-ethyl-2-(1,1-dimethyl-2-hydroxyethyl)-1,3-dioxane.

The unit derived from the alicyclic diol in the diol constituent unit of the polyester resin (A) is not particularly limited, and examples thereof may include units derived from diols, such as 1,3-cyclohexanedimethanol, 1,4-cyclohexanedimethanol, 1,2-decahydronaphthalenedimethanol, 1,3-decahydronaphthalenedimethanol, 1,4-decahydronaphthalenedimethanol, 1,5-decahydronaphthalenedimethanol, 1,6-decahydronaphthalenedimethanol, 2,7-decahydronaphthalenedimethanol, tetralindimethanol, norbornenedimethanol, tricyclodecanedimethanol, and pentacyclododecanedimethanol. The unit derived from the alicyclic diol in the diol constituent unit of the polyester resin (A) is preferably a unit derived from 1,4-cyclohexanedimethanol, a unit derived from norbornenedimethanol, a unit derived from tricyclodecanedimethanol, or a unit derived from 2,6-decahydronaphthalenedimethanol, and is particularly preferably a unit derived from 1,4-cyclohexanedimethanol.

In the present embodiment, it is preferable that the diol having a cyclic acetal skeleton is 3,9-bis(1,1-dimethyl-2-hydroxyethyl)-2,4,8,10-tetraoxaspiro[5.5]undecane (spiroglycol), and that the alicyclic diol is 1,4-cyclohexanedimethanol.

The diol constituent unit of the present embodiment may comprise other diol constituent units other than the diol having a cyclic acetal skeleton and the alicyclic diol unit. The content of other diol constituent units can be set to be 0% to 90% by mole, with respect to 100% by mole of the diol constituent unit. The content of other diol constituent units is preferably 0% to 70% by mole, more preferably 0% to 50% by mole, and particularly preferably 0% by mole or more and less than 50% by mole. Examples of such other diol constituent units may include units derived from diols including: aliphatic diols, such as ethylene glycol, trimethylene glycol, 1,4-butanediol, 1,5-pentanediol, 1,6-hexanediol, diethylene glycol, propylene glycol, and neopentyl glycol; polyether compounds, such as polyethylene glycol, polypropylene glycol, and polybutylene glycols; bisphenols, such as 4,4'-(1-methylethylidene)bisphenol, methylenebisphenol (bisphenol F), 4,4'-cyclohexylidenebisphenol (bisphenol Z), and 4,4'-sulfonylbisphenol (bisphenol S); alkylene oxide adducts of the above-described bisphenols; aromatic dihydroxy compounds, such as hydroquinone, resorcin, 4,4'-dihydroxybiphenyl, 4,4'-dihydroxydiphenyl ether, and 4,4'-dihydroxydiphenylbenzophenone; and alkylene oxide adducts of the above-described aromatic dihydroxy compounds. Taking into consideration the mechanical strength, heat resistance, and easy availability of polyester resins, if other diol constituent units are comprised, it is preferable that they are units derived from ethylene glycol.

### (Dicarboxylic acid constituent unit)

The dicarboxylic acid constituent unit in the polyester resin (A) comprises a terephthalic acid unit and/or a 2,6-naphthalenedicarboxylic acid unit. It is to be noted that the terephthalic acid unit means a unit derived from terephthalic acid. The 2,6-naphthalenedicarboxylic acid unit means a unit derived from 2,6-naphthalenedicarboxylic acid. Examples of the terephthalic acid unit may include units derived from terephthalic acid and dimethyl terephthalate. The dicarboxylic acid constituent unit is preferably a 2,6-naphthalenedicarboxylic acid unit.

In addition, the dicarboxylic acid constituent unit may comprise other dicarboxylic acid constituent units, within the range that does not impair the purpose of the present embodiment. Examples of such other dicarboxylic acid constituent units may include, but are not limited to, units derived from aliphatic dicarboxylic acids, such as succinic acid, glutaric acid, adipic acid, pimelic acid, suberic acid, azelaic acid, sebacic acid, decanedicarboxylic acid, dodecanedicarboxylic acid, cyclohexanedicarboxylic acid, decalindicarboxylic acid, norbornanedicarboxylic acid, tricyclodecanedicarboxylic acid, pentacyclododecanedicarboxylic acid, 3,9-bis(1,1-dimethyl-2-carboxyethyl)-2,4,8,10-tetraoxaspiro[5.5]undecane, 5-carboxy-5-ethyl-2-(1,1-dimethyl-2-carboxyethyl)-1,3-dioxane; and units derived from aromatic dicarboxylic acids, such as isophthalic acid, phthalic acid, 2-methylterephthalic acid, 1,4-naphthalenedicarboxylic acid, 1,5-naphthalenedicarboxylic acid, 2,7-naphthalenedicarboxylic acid, biphenyldicarboxylic acid, and tetralindicarboxylic acid.

In the present embodiment, from the viewpoint of sufficiently enhancing the balance of physical properties such as transparency, heat resistance, impact resistance and mechanical strength of the polyester resin (A), the terephthalic acid unit and/or the 2,6-naphthalenedicarboxylic acid unit is comprised in an amount of preferably 80% to 100% by mole, more preferably 90% to 100% by mole, and particularly preferably 100% by mole, with respect to 100% by mole of the dicarboxylic acid constituent unit.

Since the polyester resin (A) comprises the unit derived from the above-described diol having a cyclic acetal skeleton in an amount of 5% to 90% by mole with respect to 100% by mole of all the diol constituent units, the crystallinity thereof is decreased, and the glass transition temperature thereof is increased. As a result, the polyester resin (A) has high transparency, as well as high heat resistance. The polyester resin (A) has a favorable balance between transparency and heat resistance, compared to, for example, a polyester resin in which 100% by mole of the diol constituent units are units derived from ethylene glycol and 1,4-cyclohexanedimethanol, or other polyester resins such as PET, polybutylene terephthalate, and polylactic acid. From the same viewpoint as described above, the polyester resin (A) has the unit derived from the above-described diol having a cyclic acetal skeleton at a percentage of preferably 15% to 80% by mole, and more preferably 20% to 70% by mole.

The polyester resin (A) comprises 5% to 90% by mole of the unit derived from the above-described alicyclic diol, with respect to 100% by mole of all the diol constituent units. In the present embodiment, from the viewpoint of further improving the impact resistance of the polyester resin (A), the polyester resin (A) comprises the unit derived from the alicyclic diol at a percentage of preferably 10% to 90% by mole, and more preferably 15% to 90% by mole.

In the present embodiment, from the viewpoint of impact resistance, the polyester resin (A) may be a polyester resin, in which 15% to 50% by mole of the diol constituent unit is a unit derived from a diol having a cyclic acetal skeleton and 15% to 85% by mole of the diol constituent unit is a unit derived from an alicyclic diol.

In the present embodiment, in particular, taking into consideration the balance of transparency, heat resistance, impact resistance, mechanical strength, etc., it is preferable that 100% by mole of the dicarboxylic acid constituent unit in the polyester resin (A) is a terephthalic acid unit and/or 2,6-naphthalenedicarboxylic acid unit, and that 5% to 90% by mole of the diol constituent unit is a unit derived from 3,9-bis(1,1-dimethyl-2-hydroxyethyl)-2,4,8,10-tetraoxaspiro[5.5]undecane, 5% to 90% by mole of the diol constituent unit is a unit derived from 1,4-cyclohexanedimethanol, and 0% to 90% by mole of the diol constituent unit is a unit derived from ethylene glycol. From the same viewpoint as described above, it is particularly preferable that 100% by mole of the dicarboxylic acid constituent unit in the polyester resin (A) is a terephthalic acid unit and/or a 2,6-naphthalenedicarboxylic acid unit, and that 15% to 50% by mole of the diol constituent unit is a unit derived from 3,9-bis(1,1-dimethyl-2-hydroxyethyl)-2,4,8,10-tetraoxaspiro[5.5]undecane, 15% to 85% by mole of the diol constituent unit is a unit derived from 1,4-cyclohexanedimethanol, and 0% to 70% by mole of the diol constituent unit is a unit derived from ethylene glycol.

### (Other constituent units)

Within the range that does not impair the purpose of the present embodiment, the polyester resin (A) may comprise: monoalcohol units such as butyl alcohol, hexyl alcohol, and octyl alcohol; tri- or higher polyhydric alcohol units such as trimethylolpropane, glycerin, 1,3,5-pentanetriol, and pentaerythritol; monocarboxylic acid units such as benzoic acid, propionic acid, and butyric acid; polycarboxylic acid units such as trimellitic acid, trimethyl trimellitate, trimellitic anhydride, and pyromellitic acid; and oxyacid units such as glycolic acid, lactic acid, hydroxybutyric acid, 2-hydroxyisobutyric acid, and hydroxybenzoic acid.

The method for producing the polyester resin of the present embodiment is not particularly limited, and conventionally known methods can be applied. Examples of the method for producing the present polyester resin may include melt polymerization methods such as a transesterification method and a direct esterification method, and solution polymerization methods. Conventionally known transesterification catalysts, esterification catalysts, various stabilizers such as an etherification inhibitor, a heat stabilizer and a light stabilizer, and polymerization regulators can also be used.

### [Dye (B)]

The dye (B) in the present embodiment is a combination of two or more types of dyes each having a structure containing at least two secondary amino groups and at least one benzene ring. The dye (B) is not particularly limited, as long as it is a dye having a structure containing at least two secondary amino groups and at least one benzene ring, and various types of known dyes can be used.

The dye (B) is preferably two or more types of dyes selected from the group consisting of the compounds represented by the following formulae (3) to (6), more preferably a combination of (3) or (6) and (4) or (5), particularly preferably a combination of the compound of the formula (3) and the compound of the formula (4), or a combination of the compound of the formula (5) and the compound of the formula (6), and most preferably a combination of the compound of the formula (3) and the compound of the formula (4). The compound of the formula (3) corresponds to Color Index Solvent Blue RR or Color Index Solvent Blue 97. The compound of the formula (4) corresponds to Color Index Solvent Violet 36. The compound of the formula (5) corresponds to Reactive Red 2. The compound of the formula (6) corresponds to Solvent Blue 104.

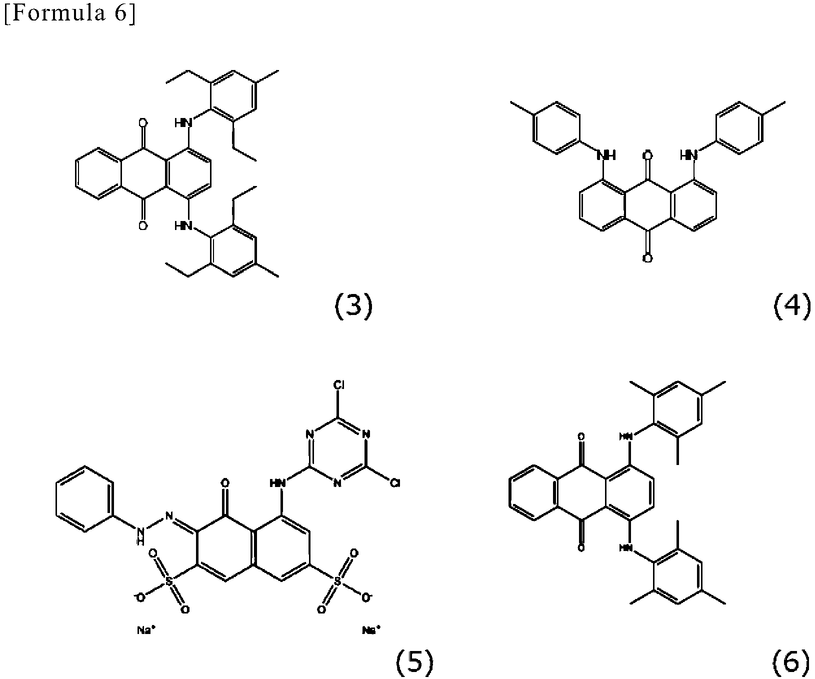

The preferred mixing ratio (unit: mass) is (3) or (6) : (4) or (5) = 99 to 50 : 1 to 50, in particular, 70 to 50 : 30 to 50, and particularly preferably, when it is a combination of the compound of the formula (3) and the compound of the formula (4), (3) : (4) = 99 to 50 : 1 to 50, in particular, 70 to 50 : 30 to 50. When it is a combination of the compound of the formula (6) and the compound of the formula (5), (6) : (5) = 99 to 50 : 1 to 50, in particular, 70 to 50 : 30 to 50.

Moreover, the dye (B) is preferably two or more types of dyes selected from the group consisting of C.I. (Color Index) Solvent Blue RR, Solvent Blue 97, Solvent Blue 104, Solvent Violet 36, and Reactive Red 2, and is more preferably a combination of at least one type selected from the group consisting of Solvent Blue RR, Solvent Blue 97 and Solvent Blue 104, and at least one type selected from the group consisting of Solvent Violet 36 and Reactive Red 2. The dye (B) is particularly preferably a combination of Solvent Blue RR and Solvent Violet 36, a combination of Solvent Blue 97 and Solvent Violet 36, or a combination of Reactive Red 2 and Solvent Blue 104. The dye (B) is most preferably a combination of Solvent Blue RR and Solvent Violet 36, or a combination of Solvent Blue 97 and Solvent Violet 36.

The mixing ratio (unit: mass) is at least one type selected from the group consisting of Solvent Blue RR, Solvent Blue 97 and Solvent Blue 104 : at least one type selected from the group consisting of Solvent Violet 36 and Reactive Red 2 = 99 to 50 : 1 to 50, and is particularly preferably 70 to 50 : 30 to 50. When it is a combination of Solvent Blue RR and Solvent Violet 36, Solvent Blue RR : Solvent Violet 36 = 99 to 50 : 1 to 50, and particularly preferably 70 to 50 : 30 to 50. When it is a combination of Solvent Blue 97 and Solvent Violet 36, Solvent Blue 97 : Solvent Violet 36 = 99 to 50 : 1 to 50, and particularly preferably 70 to 50 : 30 to 50. When it is a combination of Reactive Red 2 and Solvent Blue 104, Solvent Blue 104 : Reactive Red 2 = 99 to 50 : 1 to 50, and particularly preferably 70 to 50 : 30 to 50.

The content of the dye (B) may be determined, as appropriate, depending on the type of the polyester resin, the type of the dye, etc. The lower limit of the content is preferably 0.5 ppm or more, more preferably 2.0 ppm or more, particularly preferably 3.0 ppm or more, and most preferably 3.2 ppm or more. The upper limit of the content is preferably 10 ppm or less, more preferably 7.5 ppm or less, and particularly preferably 7.0 ppm or less. That is, the range of the content of the dye (B) is preferably selected from the group consisting of 0.5 to 10 ppm, 0.5 to 7.5 ppm, 0.5 to 7.0 ppm, 2.0 to 10 ppm, 2.0 to 7.5 ppm, 2.0 to 7.0 ppm, 3.0 to 10 ppm, 3.0 to 7.5 ppm, and 3.0 to 7.0 ppm, 3.2 to 10 ppm, 3.2 to 7.5 ppm, and 3.2 to 7.0 ppm.

The addition method is not particularly limited, and melt-kneading using an extruder is preferable. At that time, the dye (B) at a high concentration is melt-kneaded in the polyester resin (A) to prepare a masterbatch, which may be then diluted to a predetermined concentration and may be used during molding.

As mentioned above, the polyester resin (A) exhibits excellent performance in heat resistance , transparency, and impact resistance. Furthermore, the polyester resin composition of the present embodiment comprises two or more types of dyes having the above-described specific structure as a dye (B). By using multiple types of dyes, yellowing and the loss of mechanical strength upon UV light irradiation can be effectively suppressed without impairing the color tone.

Addition of a UV absorber is common as a conventionally known means for improving the UV resistance of a resin. However, according to the studies conducted by the present inventors, as the amount of such a UV absorber added increases, the absorbance in the UV region increases, and suppression of light degradation of the resin can be expected. On the other hand, this easily causes a decrease in mechanical strength, and the surface roughness due to the bleed-out of the UV absorber may become the starting point of fracture in some cases. Furthermore, such a UV absorber primarily absorbs a light in the UV region (visible light short-wavelength region), which causes the yellowing of the resin, and thus, the UV absorber is disadvantageous in that it is not suitable for transparent applications.

The dye (B) is considered to improve UV resistance with no damage on the color tone, without concerns about the problems associated with the use of such a UV absorber.

### [Optional components]

Optional components, other than the polyester resin (A) and the dye (B), may be added to the polyester resin composition of the present embodiment.

Examples of such optional components that can be added may include, but are not limited to, various types of additives and molding aids, such as an antioxidant, a light stabilizer, a plasticizer, an extender, a matting agent, a drying regulator, an antistatic agent, an anti-settling agent, a surfactant, a flow improver, a drying oil, waxes, a filler, a reinforcing agent, a surface smoothing agent, a leveling agent, and a hardening reaction promoter. Moreover, the present polyester resin composition may comprise, as optional components, resins such as a polyolefin resin, a polyester resin other than the polyester resin (A), a polyamide resin, a polycarbonate resin, an acrylonitrile resin, a vinyl chloride resin, a vinyl acetate resin, a polyacrylic acid resin, a polymethacrylic acid resin, polystyrene, an ABS resin, a polyimide resin and an AS resin, and oligomers.

The content of optional components is not particularly limited, and from the viewpoints of improving impact resistance while ensuring favorable heat resistance and transparency, and also effectively suppressing embrittlement after heat treatment, the content of such optional components is preferably 2.9% by mass or less, more preferably 1.0% by mass or less, and particularly preferably 0.5% by mass or less, with respect to 100% by mass of the polyester resin composition.

However, when the polyester resin composition comprises polycarbodiimide as an optional component, the content thereof is preferably less than 0.1% by mass. Most preferably, the polyester resin composition substantially does not comprise polycarbodiimide.

When the polyester resin composition comprises a pigment as an optional component, the content thereof is preferably less than 2.0 ppm, and more preferably less than 1.0 ppm. Most preferably, the polyester resin composition substantially does not comprise a pigment. It is to be noted that the content of a pigment means the amount of a pigment contained in the resin. In the case of a molded product of a resin, the amount of a pigment to be applied to the surface of the molded product shall not be used in calculating the content of the pigment.

### [Physical properties]

The polyester resin composition of the present embodiment is processed into a flat plate with a thickness of 2.0 mm according to injection molding, and after 48 hours of humidity conditioning, the L value measured in an atmosphere of 23°C and a relative humidity of 50% is preferably 92.0 or more, and particularly preferably 93.5 or more. Moreover, the a value measured by the same method as described above is preferably -0.1 or more and less than 0.6, and particularly preferably 0.1 or more and less than 0.4. Furthermore, the b value measured by the same method as described above is preferably -2.6 or more and less than 1.1, and particularly preferably -1.5 or more and less than 0.0.

In addition, when the polyester resin composition of the present embodiment is processed into a flat plate with a thickness of 2.0 mm according to injection molding, and is then irradiated with a UV light a total of 48 times, for example, using a UV irradiator such as a belt conveyor-type UV irradiator (light source: high-pressure mercury lamp, irradiation peak intensity (lamp distance: 180 mm): 319 mW/cm², accumulated light amount per irradiation: 2,265 mJ/cm²), the change amount Δ in the b values measured before and after the UV irradiation test (the b value after UV irradiation - the b value before UV irradiation) by the same measurement method as described above is preferably 1.5 or less, and particularly preferably 1.1 or less.

Moreover, when the polyester resin composition of the present embodiment is processed into a dumbbell piece conforming to ISO527 according to injection molding, and is then irradiated with a UV light a total of 48 times, for example, using a UV irradiator such as a belt conveyor-type UV irradiator (light source: high-pressure mercury lamp, irradiation peak intensity (lamp distance: 180 mm): 319 mW/cm², accumulated light amount per irradiation: 2,265 mJ/cm²), the change amount Δ in tensile elongations at break before and after the UV irradiation (tensile elongation at break after UV irradiation - tensile elongation before UV irradiation) is preferably -13 or more, and particularly preferably -5 or more.

### < Intended use of polyester resin composition >

Various molded products can be produced using the polyester resin composition of the present embodiment. For example, the polyester resin composition of the present embodiment can be used for injection molded bodies, extrusion molded bodies such as sheets, films and pipes, bottles, foams, adhesive materials, glues, paints, and the like. More specifically, the injection molded body may be either an insert molded body or a two-color molded body. The sheet may be either a single-layered sheet or a multilayered sheet, and the film may also be either a single-layered film or a multilayered film. Such a sheet or a film may be unstretched, or may be stretched in one direction or in two directions, and may also be laminated to a steel plate or the like. The film may be an inflation molded film. The bottle may be either a direct-blown bottle or an injection-blown bottle, or may also be injection molded. The foam may be either a bead foam or an extruded foam. In particular, the polyester resin composition of the present embodiment can be suitably used for intended uses that are expected to be used in environments where the products will be exposed to ultraviolet rays, such as products used inside automobiles, packaging materials for import and export, food packaging materials, and containers such as baby bottles and tableware. That is to say, it can be said that the polyester injection molded body, polyester extrusion molded body, polyester foam, polyester container, polyester bottle, polyester tableware, and polyester baby bottle of the present embodiment each comprise the polyester resin composition of the present embodiment. These products are not particularly limited, as long as they comprise the polyester resin composition of the present embodiment, and can be processed into various known forms suited to their respective intended uses.

### Examples

Hereinafter, the present embodiment will be described in more detail in the following examples. However, these examples are not intended to limit the scope of the present embodiment.

### [Evaluation method]

### (1) Lab value

After conditioning the flat plates obtained in the Examples and Comparative Examples described below for 48 hours, the Lab values of the Hunter color system were measured in an atmosphere of 23°C and a relative humidity of 50%. The measuring device used herein was a haze value measuring device (Model: COH-300A) manufactured by NIPPON DENSHOKU INDUSTRIES CO., LTD. The measuring device used was a device in accordance with JIS-K-7105 and ASTM D1003. Points were assigned based on the following criteria.

**[Table 1]**

| | L value | a value | b value |
|---|---|---|---|
| 3 Points | 93.5 ≤ L | 0.1 ≤ a < 0.4 | -1.5 ≤ b < 0.0 |
| 2 Points | 92.0 ≤ L < 93.5 | -0.1 ≤ a < 0.1 | -2.6 ≤ b < -1.5 |
| | | 0.4 ≤ a < 0.6 | 0.0 ≤ b < 1.1 |
| 1 Point | 91.0 ≤ L < 92.0 | -0.3 ≤ a < -0.1 | -3.7 ≤ b < -2.6 |
| | | 0.6 ≤ a < 0.8 | 1.1 ≤ b < 2.2 |
| 0 Point | L < 91.0 | a< -0.3 | b < -3.7 |
| | | 0.8 ≤ a | 2.2 ≤ b |

### (2) Yellowing resistance

The flat plates obtained in the Examples and Comparative Examples described below were subjected to UV irradiation, a total of 48 time, using a belt conveyor-type UV irradiator (light source: high-pressure mercury lamp, irradiation peak intensity (lamp distance: 180 mm): 319 mW/cm², accumulated light amount per irradiation: 2,265 mJ/cm²). By the same measurement method as described in (1) above, the b values of the flat plates were measured before and after the UV irradiation, and the change amount Δ (the b value after UV irradiation - the b-value before UV irradiation) was then calculated. Points were assigned based on the following criteria.

**[Table 2]**

| | |
|---|---|
| 3 Points | 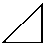 ≤ 1.1 |
| 2 Points | **1.1 <** 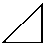 ≤ 1.5 |
| 1 Point | 1.5 < 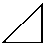 ≤ 1.9 |
| 0 Point | 1.9 < 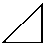 |

### (3) Reduction in mechanical strength

The dumbbell pieces obtained in the Examples and Comparative Examples described below were subjected to UV irradiation, a total of 48 time, using a belt conveyor-type UV irradiator (light source: high-pressure mercury lamp, irradiation peak intensity (lamp distance: 180 mm): 319 mW/cm², accumulated light amount per irradiation: 2,265 mJ/cm²). The tensile elongations at break were measured before and after the UV irradiation, using a Strograph AP III from TOYO SEIKI-SEISAKU-SHO, LTD., and the change amount Δ (the tensile elongation at break after UV irradiation - the tensile elongation before UV irradiation) was then calculated. Points were assigned based on the following criteria.

**[Table 3]**

| | |
|---|---|
| 3 Points | -5 < 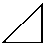 |
| 2 Points | -13 ≤ 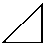 < -5 |
| 1 Point | -20 ≤ 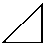 < -13 |
| 0 Point | 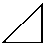 ≤ -20 |

### [Synthesis of SH]

To 30 L polyester production device equipped with a packed columntype distillation column, a partial condenser, a total condenser, a cold trap, a stirrer, a heating device and a nitrogen introduction pipe, the following raw material monomers were added:
38.3 mol of dimethyl 2,6-naphthalenedicarboxylate,
17.9 mol of ethylene glycol,
22.9 mol of 1,4-cyclohexanedimethanol, and
17.9 mol of spiroglycol. Thereafter, 0.005% by mole of tetra-n-butoxytitanium and 0.02% by mole of potassium acetate were added to the dimethyl 2,6-naphthalenedicarboxylate, and the temperature was then raised to 225°C under a nitrogen atmosphere, so as to carry out a transesterification reaction. After the reaction conversion percentage of the dicarboxylic acid component had reached 90% or more, 0.025% by mole of germanium dioxide and 0.05% by mole of triethyl phosphate were added to the dicarboxylic acid component. After that, temperature increase and pressure reduction were gradually carried out, and polycondensation was finally carried out at 280°C and under a pressure of 0.1 kPa or less. The reaction was terminated when an appropriate melt viscosity was reached, thereby obtaining a polyester resin (SH resin).

### [Synthesis of SC]

To 30 L polyester production device equipped with a packed columntype distillation column, a partial condenser, a total condenser, a cold trap, a stirrer, a heating device and a nitrogen introduction pipe, the following raw material monomers were added:
51.2 mol of dimethyl terephthalate,
0.15 mol of trimethyl trimellitate
44.1 mol of ethylene glycol,
48.4 mol of 1,4-cyclohexanedimethanol, and
5.4 mol of spiroglycol. Thereafter, 0.010% by mole of tetra-n-butoxytitanium and 0.02% by mole of potassium acetate were added to the dicarboxylic acid component, and the temperature was then raised to 225°C under a nitrogen atmosphere, so as to carry out a transesterification reaction. After the reaction conversion percentage of the dicarboxylic acid component had reached 90% or more, 0.10% by mole of germanium dioxide and 0.05% by mole of triethyl phosphate were added to the dicarboxylic acid component. After that, temperature increase and pressure reduction were gradually carried out, and polycondensation was finally carried out at 285°C and under a pressure of 0.1 kPa or less. The reaction was terminated when an appropriate melt viscosity was reached, thereby obtaining a polyester resin (SC resin).

### [Example 1]

### (Preparation of kneaded pellets)

Using a twin-screw kneading extruder (manufactured by Toshiba Machine Co., Ltd., model: TEM26SX, screw diameter: 26 mmφ, L/D: 48), a polyester resin and various additives were dry-blended according to the composition shown in Table 4, and the obtained mixture was then fed through the hopper. Strands were extruded under conditions of a cylinder temperature of 180°C to 260°C, a die temperature of 260°C, a screw rotation speed of 75 rpm, and a discharge amount of 15 kg/h. After water cooling, the extruded strands were pelletized to obtain polyester resin composition pellets.

### (Injection molding of kneaded pellets)

Subsequently, the resulting kneaded pellets were subjected to injection molding to obtain a flat plate having a thickness of 2.0 mm, and a dumbbell piece conforming to ISO527. The injection molding was performed using an injection molding machine manufactured by the Japan Steel Works, Ltd. (model: J85AD) under conditions of a cylinder temperature of 245°C to 280°C and a mold temperature of 15°C to 50°C. Using the molded flat plate and dumbbell piece, the measurement of a Lab value, a yellowing resistance test, and a mechanical strength reduction test were performed. The results are shown in Table 4.

### [Examples 2 to 6]

A flat plate and a dumbbell piece were produced in the same manner as that of Example 1, with the exception that each composition shown in Table 4 was applied, and they were then evaluated. The results are shown in Table 4.

### [Comparative Examples 1 to 13]

A flat plate and a dumbbell piece were produced in the same manner as that of Example 1, with the exception that each composition shown in Table 4 was applied, and they were then evaluated. The results are shown in Table 4.

The compositions and characteristics of the test pieces (flat plates and dumbbell pieces) obtained in Examples 1 to 6 and Comparative Examples 1 to 13 are shown.

**[Table 4]**

| | Resin composition | | | Optical procerties (2.0 mmt) | | | UV resistance | | Comprehensive **evaluation** |
|---|---|---|---|---|---|---|---|---|---|
| | Resin | Additives | | L | a | b | Yellowing resistance | Mechanical strength reduction | |
| Example 1 | **SH** | **Macrolex Blue RR (1.6 ppm)** | **Macrolex Violet 3R (1.6 ppm)** | **3** | **3** | **3** | **3** | **3** | **15** |
| | | | | **93.6** | **0.21** | **-0.06** | **+0.92** | **-3.60%** | |
| Example 2 | SH | **Solvaperm Blue 2B (2.1 ppm)** | **Macrolex Red 5B (1.1 ppm)** | **3** | **3** | **3** | **3** | **3** | **15** |
| | | | | **93.6** | **0.21** | **-0.06** | **+0.97** | **-3.70%** | |
| Example 3 | SC | **Macrolex Blue RR (1.3 ppm)** | **Macrolex Violet 3R (1.3 ppm)** | **2** | **2** | **2** | **3** | **3** | **12** |
| | | | | **93** | **0.4** | **0.22** | **+1.02** | **-3.30%** | |
| Exampl e 4 | SC | **Solvaperm Blue 2B (1.7 ppm)** | **Macrolex Red 5B (0.9 ppm)** | **2** | **2** | **2** | **3** | **3** | **12** |
| | | | | **93** | **0.4** | **0.22** | **+1.05** | **-3.40%** | |
| Example 5 | SH | **Macrolex Blue RR (0.3 ppm)** | **Macrolex Violet 3R (0.3 ppm)** | **3** | **2** | **2** | **1** | **2** | **10** |
| | | | | **95.7** | **-0.03** | **1.06** | **+1.85** | **-12.30%** | |
| Example 6 | SH | **Macrolex Blue RR (3.7 ppm)** | **Macrolex Violet 3R (3.7 ppm)** | **2** | **2** | **2** | **3** | **5** | **14** |
| | | | | **92.6** | **0.58** | **-2.55** | **+0.65** | **-3.50%** | |
| Comp Ex 1 | SH | **Macrolex Blue RR (1.6 ppm)** | **-** | **3** | **0** | **3** | **0** | **2** | **8** |
| | | | | **94.8** | **-0.8** | **0.04** | **+2.01** | **-7.60%** | |
| Comp Ex 2 | SH | **-** | **Macrolex Violet 3R (1.6 ppm)** | **3** | **3** | **1** | **0** | **1** | **8** |
| | | | | **94.8** | **0.2** | **1.3** | **+2.07** | **-10.50%** | |
| Comp Ex 3 | SH | **Tinuvin P (2.9 ppm) *UV absorber** | **-** | **3** | **2** | **0** | **0** | **0** | **5** |
| | | | | **94.5** | **-0.05** | **2.35** | **+2.43** | **-29.80%** | |
| Comp Ex 4 | SH | **Tinuvin P (5.000 ppm) *UV absorber** | **-** | **3** | **1** | **0** | **2** | **0** | **6** |
| | | | | **94.1** | **-0.12** | **3.18** | **+1.49** | **-63.80%** | |
| Comp Ex. 5 | SH | **Adekastab LA-36 (2.9 ppm) *UV absorber** | **-** | **3** | **1** | **0** | **0** | **0** | **4** |
| | | | | **94.5** | **-0.12** | **2.52** | **+2.50** | **-33.50%** | |
| Comp Ex 6 | SH | **Adekastab LA-36 (5.000 ppm) *UV absorber** | **-** | **3** | **0** | **0** | **0** | **0** | **3** |
| | | | | **94.5** | **-0.95** | **5.7** | **+2.33** | **-27.50%** | |
| Comp Ex. 7 | SH | **CYSOAB UV-3638F (2.9 ppm) *UV absorber** | **-** | **3** | **1** | **0** | **0** | **0** | **4** |
| | | | | **94.7** | **-0.11** | **2.29** | **+2.32** | **-25.70%** | |
| Comp.Ex 8 | SH | **CYSOAB UV-3638F (10,000 ppm) *UV absorber** | **-** | **3** | **1** | **0** | **1** | **0** | **5** |
| | | | | **94.7** | **-0.2** | **2.66** | **+1.65** | **-51.50%** | |
| Comp Ex. 9 | SH | **Tinuvin 1577ED (2.9 ppm) *UV absorber** | **-** | **3** | **2** | **0** | **0** | **2** | **7** |
| | | | | **94.6** | **-0.08** | **2.4** | **+2.12** | **-12.70%** | |
| Comp Ex. 10 | SH | **Tinuvin 1577ED (5,000 ppm) *UV absorber** | **-** | **3** | **0** | **0** | **0** | **1** | **4** |
| | | | | **94.6** | **-0.53** | **4.01** | **+2.23** | **-16.50%** | |
| Comp Ex. 11 | SH | **Copper phthalocyanine blue (1.0 ppm) * Inorganic pigment** | **Ultramarine Violet (UM.V-5) (1.0 ppm) * Inorganic pigment** | **3** | **0** | **2** | **0** | **0** | **5** |
| | | | | **95.3** | **-0.84** | **0.55** | **+2.12** | **-20.30%** | |
| Comp.Ex. 12 | SH | **-** | **-** | **3** | **2** | **1** | **0** | **0** | **6** |
| | | | | **96** | **-0.09** | **1.34** | **+2.14** | **-23.60%** | |
| Comp Ex. 13 | SC | **-** | **-** | **3** | **0** | **0** | **0** | **0** | **3** |
| | | | | **95.1** | **-0.15** | **2.25** | **+2.50** | **-21.50%** | |

The structures of the additives in the above Table 4 are shown below.

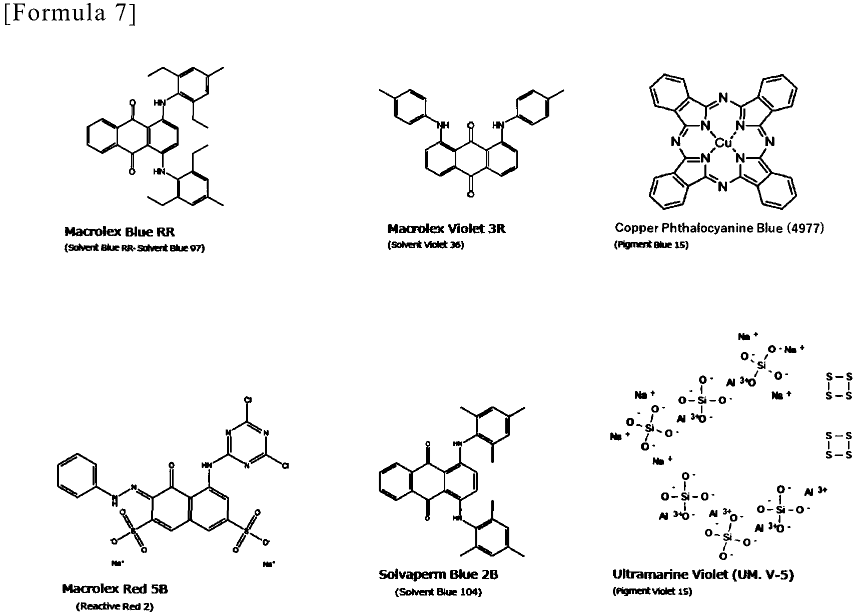

## Claims

1. A polyester resin composition comprising a polyester resin (A) and a dye (B), which is **characterized in that**
the polyester resin (A) has a dicarboxylic acid constituent unit and a diol constituent unit,
the dicarboxylic acid constituent unit is a terephthalic acid unit and/or a 2,6-naphthalenedicarboxylic acid unit,
5% to 90% by mole of the diol constituent unit is a unit derived from a diol having a cyclic acetal skeleton represented by the following general formula (1) or general formula (2), and 5% to 90% by mole of the diol constituent unit is a unit derived from an alicyclic diol, and
the dye (B) is a combination of two or more types of dyes each having a structure containing at least two secondary amino groups and at least one benzene ring: 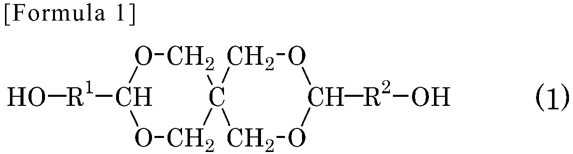
wherein, in the formula (1), R¹ and R² each independently represent an aliphatic group containing 1 to 10 carbon atoms, an alicyclic group containing 3 to 10 carbon atoms, or an aromatic group containing 6 to 10 carbon atoms, 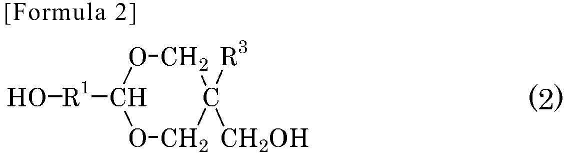
wherein, in the formula (2), R¹ is the same as that described above, R³ represents an aliphatic group containing 1 to 10 carbon atoms, an alicyclic group containing 3 to 10 carbon atoms, or an aromatic group containing 6 to 10 carbon atoms.

2. The polyester resin composition according to claim 1, wherein the dye (B) is a dye of two or more colors selected from the group consisting of C.I. (Color Index) Solvent Blue RR, Solvent Blue 97, Solvent Blue 104, Solvent Violet 36, and Reactive Red 2.

3. The polyester resin composition according to claim 1, wherein the dye (B) is a dye of two or more types selected from the group consisting of compounds represented by the following formulae (3) to (6):

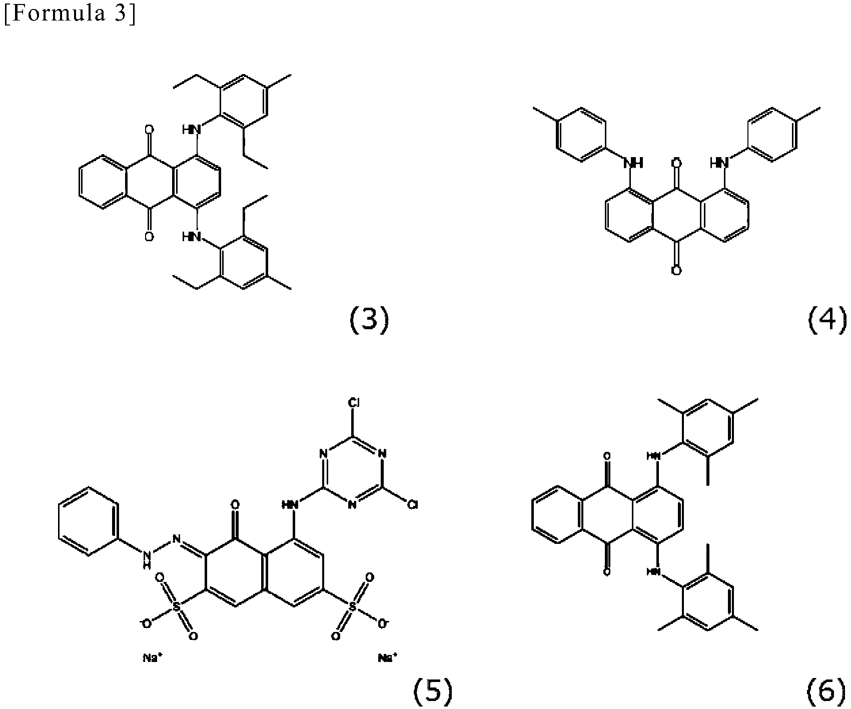

4. The polyester resin composition according to any one of claims 1 to 3, which contains the dye (B) in an amount of 3.0 ppm or more and 10 ppm or less.

5. The polyester resin composition according to any one of claims 1 to 4, wherein the diol having a cyclic acetal skeleton is 3,9-bis(1,1-dimethyl-2-hydroxyethyl)-2,4,8,10-tetraoxaspiro[5.5]undecane, and the alicyclic diol is 1,4-cyclohexanedimethanol.

6. The polyester resin composition according to any one of claims 1 to 5, wherein the dicarboxylic acid constituent unit is a 2,6-naphthalenedicarboxylic acid unit.

7. The polyester resin composition according to any one of claims 1 to 6, wherein the content of polycarbodiimide in the polyester resin composition is less than 0.1% by mass.

8. A molded product, which uses the polyester resin composition according to any one of claims 1 to 7.

9. A container, which uses the polyester resin composition according to any one of claims 1 to 8.

10. A baby bottle, which uses the polyester resin composition according to any one of claims 1 to 9.
